Europäisches Patentamt

European Patent Office

Office européen des brevets

(19)

(11) Veröffentlichungsnummer: **0 218 262 B1**

(12) # EUROPÄISCHE PATENTSCHRIFT

(45) Veröffentlichungstag der Patentschrift: **28.08.91**

(51) Int. Cl.⁵: **A21C 7/01**, A21C 9/00

(21) Anmeldenummer: **86114079.6**

(22) Anmeldetag: **10.10.86**

(54) **Teigwirkmaschine.**

(30) Priorität: **10.10.85 DE 3536127**

(43) Veröffentlichungstag der Anmeldung:
**15.04.87 Patentblatt 87/16**

(45) Bekanntmachung des Hinweises auf die
Patenterteilung:
**28.08.91 Patentblatt 91/35**

(84) Benannte Vertragsstaaten:
**AT DE FR**

(56) Entgegenhaltungen:
**DE-C- 548 276**
**DE-C- 620 395**
**FR-A- 1 256 759**
**US-A- 3 125 039**
**US-A- 3 272 153**

(73) Patentinhaber: **Lippelt, Wilhelm**
**Ostendstrasse 15**
**W-6102 Pfungstadt(DE)**

(72) Erfinder: **Lippelt, Wilhelm**
**Ostendstrasse 15**
**W-6102 Pfungstadt(DE)**

(74) Vertreter: **Zinngrebe, Horst, Dr.rer.nat.**
**Saalbaustrasse 11**
**W-6100 Darmstadt(DE)**

## Beschreibung

Die Erfindung betrifft eine Teigwirkmaschine nach dem Obergegriff des Anspruchs 1.

Bei der aus der DE-A-1 073 981 bekannten Maschine dieser Art besteht das Wirkteil aus einer feststehenden, sich zum Band hin öffnenden Rinne. Das Band ist als Teigträger mit einem Exzenterantrieb gekoppelt, der dem Band ein in seiner Längsrichtung wirkende oszillierende Bewegung relativ zum Wirkteil vermittelt. Teigträger und Wirkteil bilden eine langgestreckte Wirkkammer. Diese Maschine hat neben anderen den Nachteil, daß der Teigling von Hand durch die Wirkkammer befördert werden muß und sich ein Schluß in den Teigling nicht einarbeiten läßt.

Aus der DE-C-29 19 333 ist eine Wirkeinrichtung mit mehreren am Umfang eines Tellers ausgebildeten Wirkkammern bekannt, von denen jede zur Aufnahmen eines Teiglings dient. Der Teigling wird mittels einer Wirkplatte in der Kammer bearbeitet, wobei sich ein Schluß bildet.

Aus DE-C-548 276 ist eine Teigwirkmaschine mit übereinander angeordneten, gleichsinnig und mit gleicher Geschwindigkeit umlaufenden endlosen Wirkbändern bekannt, von denen die oberen Bänder eine zusätzliche Wirkbewegung über dem unteren Bande ausführen. Zwischen den Wirkbändern sind an endlosen Ketten angeordnete, mit offenen Wirkfächern für die Teiglinge versehene Führungsquerstücke angeordnet, die beim Wirken durch das obere Wirkband abgedeckt werden. Nachteilig ist hierbei die Erzeugung von Teiglingen, die in Förderrichtung langgestreckt sind und sich daher beim Ablösen vom Förderband hinter der Maschine verbiegen oder verformen. Ferner ist nachteilig, daß zur Erzielung eines guten Schlusses im Teigling die oberen Wirkbänder erhebliche Querbewegungen zur Förderrichtung ausführen müssen, was einen ausladenden Aufbau der Maschine bedingt.

Demgegenüber soll mit der Erfindung eine Maschine der eingangs genannten Art geschaffen werden, die mit möglichst einfachen Mitteln Teiglinge herzustellen gestattet, die eine langgestreckte Form mit gutem Schluß haben.

Diese Aufgabe wird gelöst durch eine Teigwirkmaschine nach Anspruch 1. Sie sorgt für ein wirksames Durchwirken jedes der in den Wirkkammern mitgenommenen Teiglinge in der Weise, daß ein sich quer zur oszillierenden Bewegung erstreckender Schluß im Teigling erhalten wird. Da der Teigling aus der Wirkkammer nicht nach oben ausweichen kann, nimmt er im Verlauf des Wirkprozesses eine längliche Gestalt an.

Es erweist sich als zweckmäßig, die gegenüberliegenden freien Enden jeder Wirkwange in je einem Kettenglied je einer endlosen Kette eines Wirkteil-Antriebs zu haltern. Eine besonderes schonende Behandlung des Teiglings wird dadurch gewährleistet, daß benachbarte Wirkwangen durch eine dem Förderband gegenüberliegende, flexible Kammerdecke, beispielsweise aus Tuch, verbunden sind.

Alternativ können die Wirkkammern durch Zusammenwirken eines flexiblen Bandes als Kammerdecke mit den relativ zum Band oszillierenden Wirkwangen gebildet sein.

Zweckmäßig ist der dem Förderband benachbarte Rand jeder Wirkwange abgerundet, so daß der Zusammenhalt des Teiglings in Förderbandnähe erhalten bleibt.

In zweckmäßiger Ausgestaltung der Erfindung kann an jeder Wirkkammerdecke ein Druckbalken oder -stempel angeordnet sein. Zur Anpassung des Wirkvorgangs an die besonderen Eigenschaften des jeweiligen Teigs der Teiglinge kann zweckmäßig die Höhe der Wirkkammern über dem Förderband einstellbar sein. Diese Einstellbarkeit kann entweder in der Weise realisiert sein, daß die Wirkkammern an einem Träger befestigt sind, der relativ zum Förderband anhebbar ist, oder es kann die Einrichtung so getroffen sein, daß das Förderband relativ zu den Wirkkammern absenkbar ist.

Schließlich kann es sich als zweckmäßig erweisen, wenn alle Wirkkammern eine gemeinsame Kammerdecke in Form eines umlaufenden, weiteren Bandes besitzen, dessen unteres Trumm sich mit gleicher Geschwindigkeit bewegt wie das obere Trumm des Förderbandes.

Die Erfindung wird nachstehend anhand der in der beigefügten Zeichnung schematisch dargestellten Ausführungsbeispiele im einzelnen beschrieben.

Es zeigen:

Fig. 1     eine schematische Ansicht der wesentlichen Teile einer Teigwirkmaschine in einer ersten Betriebsphase, und

Fig. 2     die Maschine nach Fig. 1 in einer zweiten Betriebsphase,

Fig. 3     eine schematische Ansicht einer anderen Ausführungsform,

Fig. 4     Teildarstellung der Maschine zur Erläuterung

Fig. 5     besonderer Wirkkammerformen

Fig. 6     schematische Darstellung einer weiteren Ausführungsform der Erfindung

Ein endloses Förderband 20, dessen Oberfläche aus eine Kunststoffvlies bestehen kann, ist um mehrere Umlenkrollen 21 ... 24 herumgeführt, von denen wenigstens eine Umlenkrolle, etwa die Rolle 24, mit einen nicht dargestellten Antrieb gekoppelt sein kann. Die beiden oberen Rollen 21, 23 sind etwa auf gleicher Höhe auf einer Maschinenrahmen montiert, sodaß das Förderband zwischen ihnen, gegebenenfalls durch weitere Rollen unterstützt, sich etwa horizontal erstreckt.

Über dem oberen Trum 26 des Förderbandes 20 ist in dem erwähnten Maschinenrahmen ein massiver, langgestreckter Träger 10 montiert, der selbst eine sich quer zur Figurenebene erstreckende Rahmenkonstruktion sein kann. Der Träger 10 ist an seinen vier Ecken oberhalb und unter-halb der Figurenebene mit je einem Ritzel versehen, wobei um je zwei Ritzel etwa je eine endlose Kette umläuft. Jede der beiden Ketten, die nicht dargestellt sind, verläuft mit ihren Trums oberhalb und in Richtung des Förderbandes 20. In den Kettengliedern sind in den Figuren als Kreise angedeutete, gleich beabstandete Stangen 41, 42, 43, 44, 45 gleichen Querschnitts befestigt, welche von den Ketten getragen mit diesen um den Träger 10 umlaufen. Dazu ist wenigstens eines der Ritzel mit dem Antrieb der Maschine gekoppelt.

An der auf den Träger zuweisenden Seite jeder Stange 41 ... 45 ist je ein sich über die Länge der Stangen zwischen den Ketten erstreckendes Tuch 46, 47, 48, 49 so befestigt, daß es den Zwischenraum zwischen benachbarten Stangen locker überbrückt. Auf diese Weise bilden je zwei benachbarte Stangen, etwa die Stangen 41 und 42, mit dem zwischen ihnen befestigten Tuch, etwa dem Tuch 46, je eine Wirkkammer für je einen Teigling, also etwa die Wirkkammer 32 für den Teigling 62. Der Träger 10 ist in solcher Höhe über dem Trum 26 montiert, daß die sich unmittelbar über dem Trum 26 befindenden Wirkkammern 32, 34, 36, 38 zu diesem geringen Abstand d behalten.

Jede Wirkkammer weist zwei einander gegenüberliegende Wirkwangen 31, 33 auf, die im dargestellten Beispiel von der Peripherie der die Wirkkammer seitlich begrenzenden Stangen gebildet werden und daher in den Figuren konvexe Form haben. Durch eine entsprechende Wahl des Querschnitts einer Stange kann die Wirkwange, wie weiter unten noch erläutert wird, konkave Form erhalten, die sich für das Durchwirken eines Teiglings besonders empfiehlt.

Die Maschine arbeitet wie folgt: An einer Ablagestelle 50 am in Förderrichtung vorderen Teil des Trum 26 werden nacheinander Teiglinge 62 auf das angetriebene Förderband abgelegt, dessen Trum 26 sich in Richtung des Pfeiles 52 bewegt. Zusammen mit dem Förderband werden auch die beiden Ketten und mit ihnen die an ihnen befestigten Wirkkammern so bewegt, daß die dem Trum 26 gegenüberliegenden Wirkkammern sich im wesentlichen gleichphasig (bis auf den nachstehend erläuterten wesentlichen Unterschied) mit dem Trum 26 in Richtung 52 bewegen. Der Teigling 62 wird so von der ersten Wirkkammer von oben erfaßt und mitgeführt. Entsprechend werden die nachfolgend an der Ablagestelle 50 abgelegten Teiglinge von den nachfolgenden Wirkkammern mitgenommen, wobei sie auf dem Trum 26 liegen bleiben.

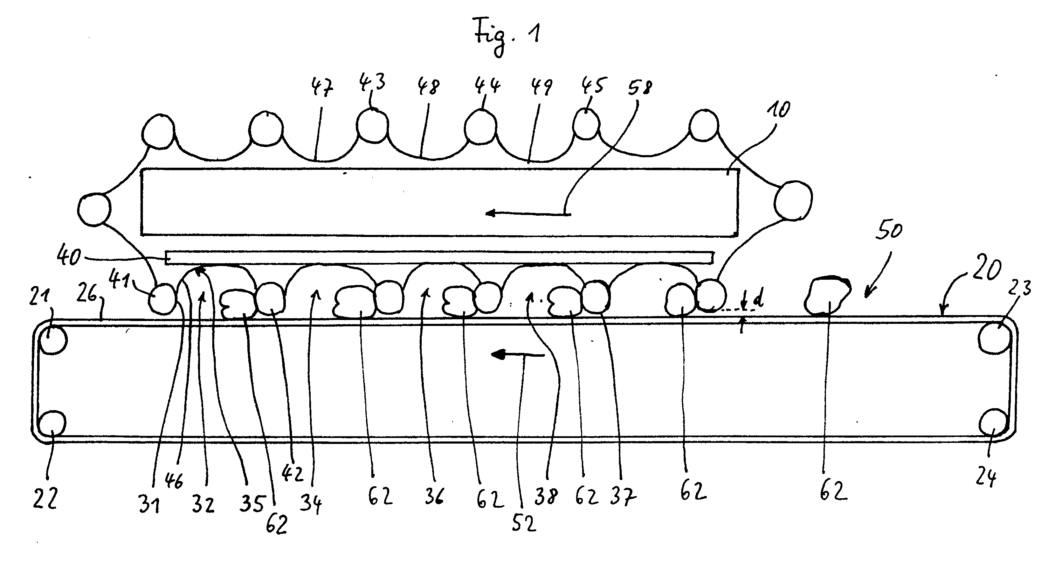

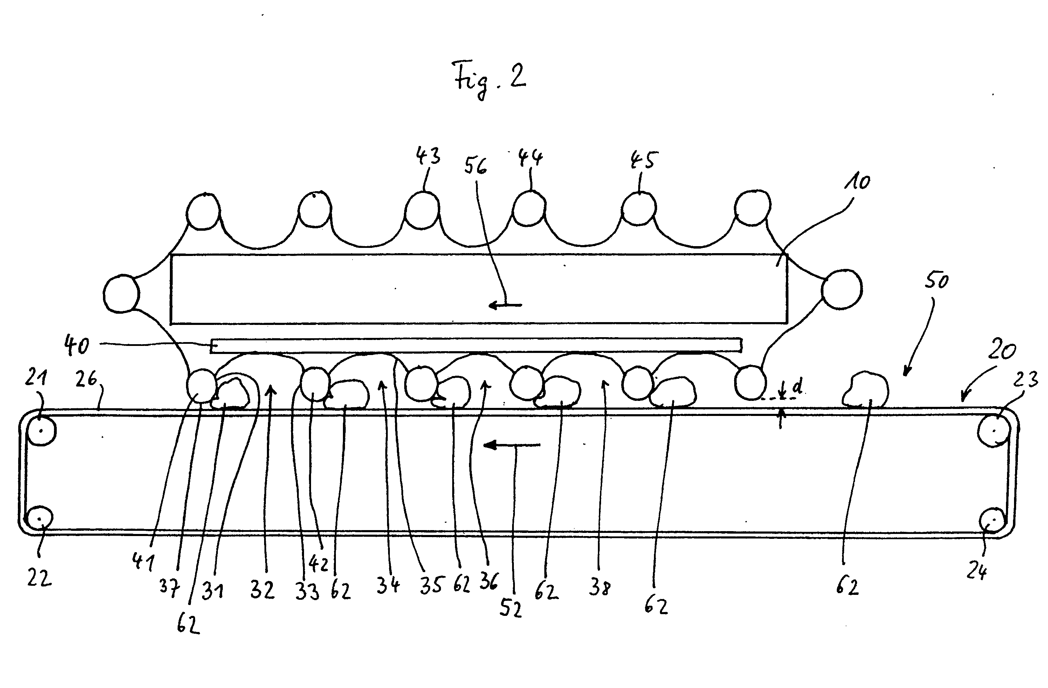

Für das Wirken der Teiglinge ist nun wesentlich, daß der mit den, Förderband 20 gleichen Förderbewegung der Wirkkammern eine oszillierende Bewegung übrlagert ist, die im dargestellten Beispiel ebenfalls in Förderrichtung weist. Durch entsprechende Steuerung des Kettenantriebs wird erreicht, daß die Wirkkammern 32, 34, 36, 38 gemeinsam sich abwechselnd etwas schneller als das Förderband 20 (Fig. 1) und danach etwas langsamer als das Förderband 20 (Fig. .2) bewegen. In den Figuren 1 bis 3 ist dies dadurch angedeutet, daß von den die Bewegung des Trägers 10 bezeichnenden Pfeilen 56, 58 der Pfeil 56 kürzer und der Pfeil 58 länger ist als der Pfeil 52 für die Bewegung des Bandes 20.

Bei der gegenüber dem Förderband-Bewegung schnelleren Bewegung der Wirkkammern 32 ... 38 wirkt die in Förderrichtung hintere Wirkwange 33 auf den in der Wirkkammer enthaltenen und mit der (jetzt relativ zur Wirkkammer-Bewegung langsameren) Fördergeschwindigkeit transportierten Teigling drückend ein und bereitet dabei eine erste Falte im Teigling vor. Bei der anschließenden gegenüber der Fördergeschwindigkeit langsameren Bewegung der Wirkkammern 32 ... 38 kommt die vordere Wirkwange 31 der gleichen Wirkkammer in drückende Anlage an den Teigling, der jetzt von seiner vorderen Seite gewirkt wird, wobei sich ebenfalls wieder die Falte im Teigling ergibt.

Da sich die solcherart oszillierende Bewegung der Wirkkammern über die ganze Länge des Trums 26 fortsetzt, die von den Wirkkammern überdeckt wird, wird der Teigling entsprechend mehrmals auf seinem Förderweg gewirkt, sodaß er am Ende des Trums 26, an welchem "seine" Wirkkammer von den Ketten zwangsgeführt von dem Trum 26 abgehoben wird, vollständig durchwirkt und mit feinem Schluß versehen zur Weiterbearbeitung ausgegeben wird.

Dabei ist zu beachten, daß der sich in einer Wirkkammer eingeschlossene Teigling nicht nach oben aus der Kammer entfernen kann, da ihn daran die als flexibles Tuch ausgebildete Kammerdecke 35 hindert. Der Teigling 62 kann den Wirkkräften also nur durch seitliche Längung ausweichen, wofür die quer zur Papierebene langgestreckte Form jeder Wirkkammer ausreichend Platz bietet. Somit verläßt der Teigling 62 die beschriebene Teiglangwirkmaschine als langgewirktes Teigstück mit sauberem Schluß.

Das Verhältnis von Dicke zu Länge des fertigen Teigstücks läßt sich dann beeinflussen, wenn die flexiblen Kammerdecken 35 von einem etwa allen unteren Wirkkammern gemeinsamen Druckbalken beaufschlagt sind. Dieser verhindert je nach seiner Einstellung ein zu weites Ausweichen des Teiglings 62 gegen die flexible Kammerdecke 35.

Der Abstand d läßt sich gut dadurch verändern, daß der Träger mit einer relativ zur der Lagerung des Förderbandes 20 wirkenden Hubeinrichtung ausgerüstet ist (welche hier nicht dargestellt ist). Man erreicht hierdurch eine Anpassung des Eingriffs der Wirkwangen in den Teigling an die Konsistenz und die Zusammensetzung des Teiglings (Weizen- oder Roggenbasis, etc).

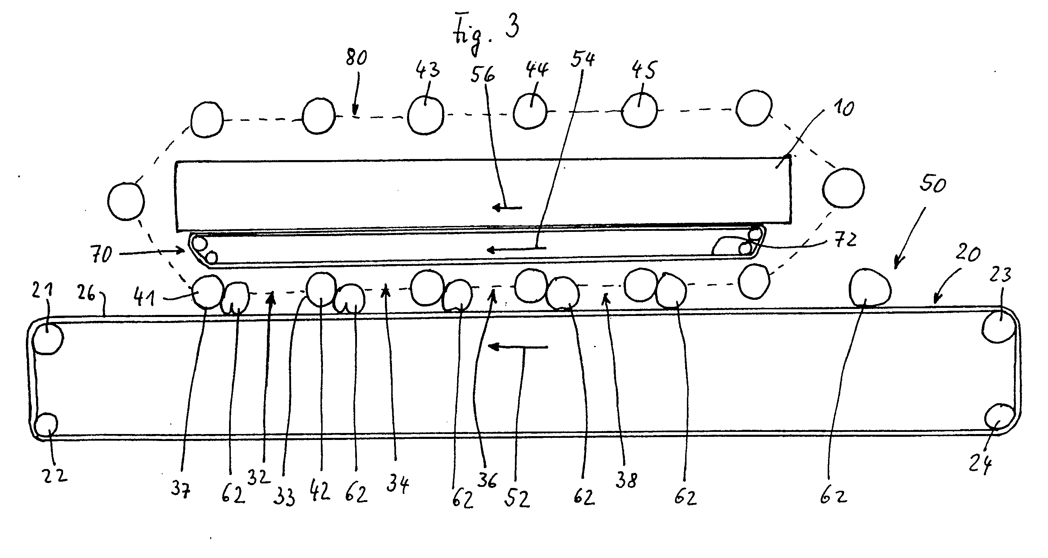

Bei der in Fig. 3 dargestellten Ausführungsform besitzt die Kammerdecke jeder Wirkkammer 32, 34, 36, 38 die Form eines umlaufenden Bandes 70, das sich mit gleicher Geschwindigkeit wie das Förderband 20 bewegt. Entsprechend ist der die Bewegung des weiteren Bandes 70 anzeigende Pfeil 54 zum Pfeil 52 gleichlang. Die die Wirkkammern in Bewegungsrichtung begrenzenden Stangen 41... 45 führen jedoch wie bei dem vorstehend beschriebenen Ausführungsbeispiel relativ zum Förderband 20 sowie zum weiteren Band 70 die erläuterte oszillierende Bewegung aus. Die allen zum Förderband 20 hin offenen Wirkkammern 32...38 gemeinsame Kammerdecke ist hiernach das untere Trum 72 des weiteren Bandes 70.

Mit dieser Maßnahme wird sichergestellt, daß der Teigling 62 in seiner Wirkkammer sich von seiner Position, in der er an der Beschickungsstelle 50 auf das Trum 26 abgelegt worden ist, durch den Wirkvorgang nicht entfernen, insbesondere nicht hin- und herrollen kann. Der Teigling 62 wird vielmehr während des Wirkens zwischen den Trums 26 und 72 festgehalten, so daß die Wirkung wie erwünscht nur auf den vorderen und hinteren Teil des Teiglings 62 ausgeübt wird. Es versteht sich, daß die auf die Wirkkammern zuweisende Oberfläche des weiteren Bandes 70 in ihrer Rauigkeit den Eigenschaften des Teiglings 62 zu diesem Zweck angepaßt sein kann.

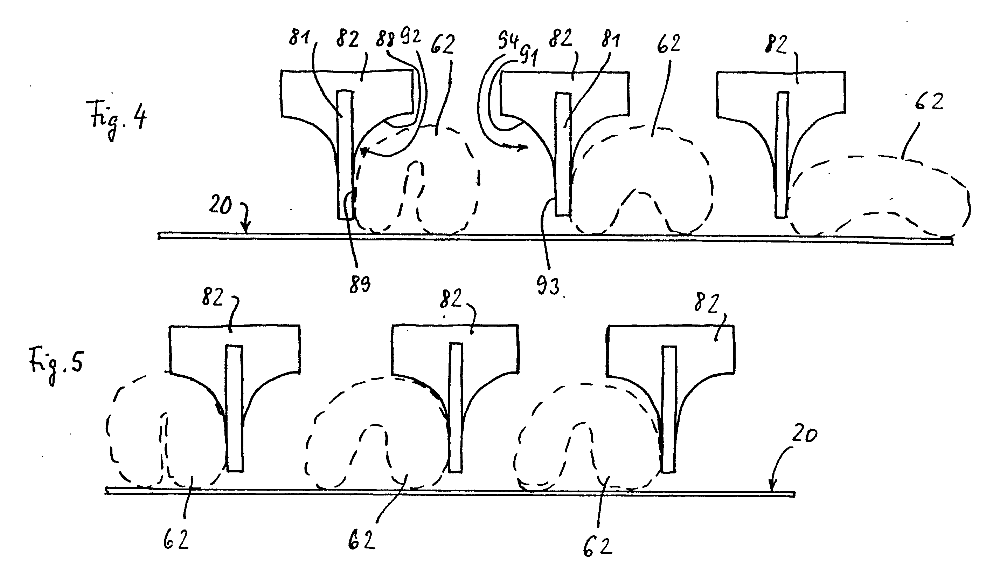

Die Figuren 4 und 5 zeigen eine besondere Ausführungsform der bereits oben erläuterten konkaven Gestaltung der Wirkflächen. die in den vorangegangenen Beispielen dargestellten im Querschnitt runden Stangen 41...45 haben hier rechteckiges Profil mit einer mittigen, auf das Förderband 20 zuweisenden, beiderseits konkav gestalteten Verlängerung, die in eine Leiste 81 übergeht. Damit besteht die vordere Wirkwange 92 aus einem relativ zum Förderband 20 oberen konkaven Wandabschnitt und einem unteren, von der Leiste 81 gebildeten geradlinigen Wandabschnitt 89. Entsprechend besteht die hintere Wirkwange 94 aus einem oberen konkaven Abschnitt 91 und einem unteren geradlinigen Abschnitt 93, der Teil der eingesetzten Wirkleiste 81 ist.

Figur 4 zeigt die Bildung des Schlußes in drei Etappen durch das Zusammenwirken der vorderen Wirkwange, wobei zunächst der Teigling 62 von der vorderen Wirkwange 92 der Stange 82 zusammengeschoben wird. Bei einer Beschleunigung des Trägers 10 wirkt dann die hintere Wirkwange 94 auf den Teigling 62 ein, wie sich aus Figur 5, rechtes Teilbild ergibt. Wenn anschließend die Vorschubgeschwindigkeit des Trägers 10 wieder geringer wird als die Geschwindigkeit des Förderbandes 20, wirkt die vordere Wirkwange 92 der Stange 82 gemäß mittlerem Teilbild in Figur 4 auf die Vorderseite des Teiglings 62 ein, wobei sich der Schluß schon deutlich ausbildet.

Bei erneuter Beschleunigung des Trägers 10 wirkt wiederum die hintere Wirkwange 94 auf den Teigling 62 gemäß mittlerem Bild in Figur 5 zur Vergrößerung des Schlußes, der sich bei den anschließenden Bewegungsphasen des Trägers 10 gemäß linkem Teilbild aus Figur 4 und linkem Teilbild aus Figur 5 in der erwünschten Weise vertieft.

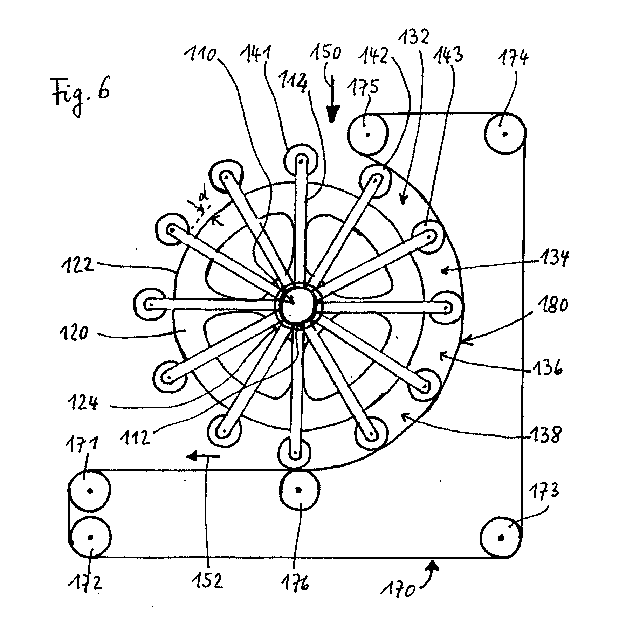

Bei der in Figur 6 dargestellten Ausführungsform der Erfindung weist die Teigwirkmaschine eine zylindrische, mit einem nicht dargestellten Antrieb gekoppelte Trommel 120 auf, die um eine zur Zeichenebene senkrechte Achse drehbar ist. Die Trommel weist eine durchgehende zusammenhängende zylindrische Mantelfläche 122 auf. Koaxial zur Welle 124 der Trommel 120 ist an den beiden gegenüberliegenden Stirnflächen der Trommel außerhalb derselben je ein Rad 110 auf einer Welle 112 gelagert, das eine Vielzahl von sich radial erstreckenden Armen aufweist, von denen einer mit 114 bezeichnet ist. Am freien Ende trägt jeder Arm 114 eine sich zu einer Mantellinie der Außenfläche 122 parallel im Abstand d erstreckende Stange, von denen zwei Stangen mit 141, 142 bezeichnet sind. Die Stangen 141, 142 entsprechen in ihrer Aufgabe und Funktion den Stangen 41 ... 45 aus der oben erläuterten Ausführungsform der Erfindung. Jede dieser Stangen 141, 142 besitzt daher Wirkwangen für den in dieser Ausführungsform der Erfindung nicht dargestellten Teigling.

Die Welle das Rades 110 ist mit einem nicht dargestellte Wirkantrieb gekoppelt und relativ zur Trommel 120 oszillierend bewegbar.

An der der Trommel 120 abgewandten Außenseite der Stangen 141, 142 ist über einen Teil des Umfangs der Trommel 120 ein endloses Förderband 1170 über Umlenkrollen 171, 172, 173, 174, 175, 176 geführt, von denen wenigstens eine mit dem Antrieb der Trommel 120 gekoppelt ist. Das Förderband 170 besitzt daher im Betrieb über den die Trommel umgreifenden Umfangsabschnitt 180 die gleiche Umfangsgeschwindigkeit wie die Trommel 120. Demgegenüber führen die Stangen 141, 142 eine Bewegung aus, die sich durch Überlagerung einer oszillierenden Bewegung über eine der Trommel 120 gleiche Umfangsewegung ergibt. Im Betrieb bleiben daher die Stangen 141, 142 hinter der Bewegung der Trommeloberfläche 122 und des Förderbandabschnittes 180 zurück, um danach dieser Bewegung wieder vorauszueilen.

Auf diese Weise werden zwischen zwei je benachbarten Stangen 141, 142 Wirkkammern 132, 134, 136, 138 während ihrer Bewegung längs des Umfangsabschnitts 180 gebildet.

Ein Teigling wird der Teigwirkmaschine längs des Pfeils 150 von oben zugeführt und fällt zwischen zwei benachbarte Stangen 141, 143 auf die Außenfläche 122. Der Teigling wird sodann von der Trommel 120 mitgenommen und durch die oszillierende Bewegung der Wirkwangen zur Bildung eines Schlusses durchwirkt, wie dies bei den vorstehende Ausführungsformen der Erfindung erläutert worden ist. Der Teigling bleibt nach fertiger Durchwirkung auf dem Förderband 170 liegen und wird bei 152 aus der Teigwirkmaschine ausgegeben. Es versteht sich, daß in der dargestellten Ausführungsform die Trommel 120 und der Abschnitt 180 des Bandes 170 in Richtung des Uhrzeigers angetrieben sind.

## Patentansprüche

1. Teigwirkmaschine mit einem mit einem Antrieb gekoppelten, relativ zu einem Wirkteil (10) beweglichen, wenigstens abschnittweise ebenen Förderband (20) für wenigstens einen Teigling (62), wobei das Wirkteil (10) mehrere, in Bewegungsrichtung des Förderbandes (20; 120) hintereinander angeordnete und zum Förderband hin offene Wirkkammern (32, 34, 36, 38; 132, 134, 136, 138) mit jeweils zwei gegenüberliegenden Wirkwangen (31, 33; 88, 89) aufweist, welche mit einem gemeinsamen Wirkantrieb derart gekoppelt sind, daß die Wirkwangen gemeinsam eine Bewegung ausführen können, die durch Überlagerung einer der Förderbandbewegung gleichen Bewegung mit einer oszilierenden Bewegung entsteht, dadurch gekennzeichent, daß die sich quer zur Förderbandbewegung erstreckenden, ungeteilten Wirkwangen (31, 33; 88, 89) Stangen mit konvexer oder konkaver Außenkontur sind.

2. Maschine nach Anspruch 1, dadurch gekennzeichnet, daß die gegenüberliegenden freien Enden jeder Wirkwange in je einem Kettenglied je einer endlosen Kette eines Wirkteil-Antriebs gehalten sind.

3. Maschine nach einem der Ansprüche 1 oder 2, dadurch gekennzeichnet, daß benachbarte Wirkwangen durch eine dem Förderband (20) gegenüberliegende, flexible Kammerdecke (35), beispielsweise aus Tuch, verbunden sind.

4. Maschine nach einem der Ansprüche 1 oder 2, dadurch gekennzeichnet, daß die Wirkkammern durch Zusammenwirken eines flexiblen Bandes (70; 170) als Kammerdecke mit den relativ zum Band oszillierenden Wirkwangen gebildet sind.

5. Maschine nach einem der vorstehenden Ansprüche, dadurch gekennzeichnet, daß der dem Förderband (20) benachbarte Rand (37) jeder Wirkwange abgerundet ist.

6. Maschine nach einem der vorstehenden Ansprüche, dadurch gekennzeichnet, daß an jeder Wirkkammerdecke ein Druckbalken oder -stempel angeordnet ist.

7. Maschine nach einem der vorstehenden Ansprüche, dadurch gekennzeichnet, daß die Höhe (d) der Wirkkammern über dem Förderband einstellbar ist.

8. Maschine nach einem der vorstehenden Ansprüche, dadurch gekennzeichnet, daß die Wirkkammern an einem Träger (10) befestigt sind, der relativ zum Förderband (20) anhebbar ist.

9. Maschine nach einem der vorstehenden Ansprüche, dadurch gekennzeichnet, daß das Förderband (20) relativ zu den Wirkkammern absenkbar ist.

10. Maschine nach einem der vorstehenden Ansprüche, dadurch gekennzeichnet, daß alle Wirkkammern eine gemeinsame Kammerdekke in Form eines umlaufenden, weiteren Bandes (70) besitzen, dessen unteres Trumm (72) sich mit gleicher Geschwindigkeit bewegt wie das obere Trumm (26) des Förderbandes (20).

## Claims

1. A dough kneading machine comprising a conveyor belt (20) for at least one dough item (62), which conveyor belt is coupled to a drive and is movable relative to a kneading part (10) and which is flat at least in a portion-wise manner, wherein the kneading part (10) has a plurality of kneading chambers (32, 34, 36, 38; 132, 134, 136, 138) which are arranged in succession in the direction of movement of the conveyor belt (20; 120) and which are open towards the conveyor belt and which each have two mutually oppositely disposed kneading side pieces (31, 33; 88, 89) which are coupled to a common kneading drive in such a way that the kneading side pieces can jointly perform a movement which is produced by superimposition of a movement identical to the conveyor belt movement, with an oscillating movement, characterised in that the undivided kneading side pieces (31, 33; 88, 89) which extend transversely with respect to the conveyor belt movement are bars with a convex or concave outside contour.

2. A machine according to claim 1 characterised in that the oppositely disposed free ends of each kneading side piece are held in a respective chain member of a respective endless chain of a kneading part drive.

3. A machine according to one of claims 1 and 2 characterised in that adjacent kneading side pieces are connected by a flexible chamber cover means (35), for example of cloth, which is disposed opposite the conveyor belt (20).

4. A machine according to one of claims 1 and 2 characterised in that the kneading chambers are forms by the co-operation of a flexible belt (70; 170) as a chamber cover means with the kneading side pieces which oscillate relative to the belt.

5. A machine according to one of the preceding claims characterised in that the edge (37) of each kneading side piece, which is adjacent to the conveyor belt (20), is rounded.

6. A machine according to one of the preceding claims characterised in that a pressure bar member or ram member is disposed at each kneading chamber cover means.

7. A machine according to one of the preceding claims characterised in that the height (d) of the kneading chambers above the conveyor belt is adjustable.

8. A machine according to one of the preceding claims characterised in that the kneading chambers are secured to a carrier (10) which can be raised relative to the conveyor belt (20).

9. A machine according to one of the preceding claims characterised in that the conveyor belt (20) can be lowered relative to the kneading chambers.

10. A machine according to one of the preceding claims characterised in that all kneading chambers have a common chamber cover means in the form of a circulating further belt (70) whose lower run (72) moves at the same speed as the upper run (26) of the conveyor belt (20).

**Revendications**

1. Machine à pétrir la pâte avec une bande transporteuse (20) plane au moins par sections, mobile par rapport à une pièce de pétrissage (10), couplée à un entraînement, pour au moins un pâton (62), la pièce de pétrissage (10) présentant plusieurs chambres de pétrissage (32, 34, 36, 38 ; 132, 134, 136, 138) disposées les unes derrière les autres dans la direction du mouvement de la bande transporteuse (20 ; 120) et ouvertes vers la bande transporteuse avec chacune deux faces de pétrissage opposées (31, 33 ; 88, 89), qui sont couplées avec un entraînement de pétrissage commun de telle façon que les faces de pétrissage peuvent effectuer ensemble un mouvement qui résulte de la superposition d'un mouvement égal au mouvement de la bande transporteuse avec un mouvement oscillant, caractérisée en ce que les faces de pétrissage (31, 33 ; 88, 89) non séparées s'étendant transversalement par rapport au mouvement de la bande transporteuse sont des barres avec contour extérieur convexe ou concave.

2. Machine selon la revendication 1, caractérisée en ce que les extrémités libres opposées de chaque face de pétrissage sont maintenues chacune dans un maillon de chaîne d'une chaîne sans fin d'un entraînement de pièce de pétrissage.

3. Machine selon l'une des revendications 1 ou 2, caractérisée en ce que des faces de pétrissage voisines sont reliées par un couvercle de chambre souple (35), par exemple en étoffe, opposé à la bande transporteuse (20).

4. Machine selon l'une des revendications 1 ou 2, caractérisée en ce que les chambres de pétrissage sont formées par concours d'une bande souple (70 ; 170) comme couvercle de chambre avec les faces de pétrissage oscillantes par rapport à la bande.

5. Machine selon l'une des revendications précédentes, caractérisée en ce que le bord (37) voisin de la bande transporteuse (20) de chaque face de pétrissage est arrondi.

6. Machine selon l'une des revendications précédentes, caractérisée en ce qu'une poutre ou Un poinçon de compression est disposé à chaque couvercle de chambre de pétrissage.

7. Machine selon l'une des revendications précédentes, caractérisée en ce que la hauteur (d) des chambres de pétrissage au-dessus de la bande transporteuse est réglable.

8. Machine selon l'une des revendications précédentes, caractérisée en ce que les chambres de pétrissage sont fixées à un support (10) qui peut être élevé par rapport à la bande transporteuse (20).

9. Machine selon l'une des revendications précédentes, caractérisée en ce que la bande transporteuse (20) peut être baissée par rapport aux chambres de pétrissage.

10. Machine selon l'une des revendications précédentes, caractérisée en ce que toutes les chambres de pétrissage possèdent un couvercle de chambre commun sous forme d'une autre bande circulante (70) dont le brin inférieur (72) se déplace à la même vitesse que le brin supérieur (26) de la bande transporteuse (20).

Fig. 1

Fig. 2

Fig. 3

Fig. 4

Fig. 5

EP 0 218 262 B1

Fig. 6

EP 0 218 262 B1